# EUROPÄISCHE PATENTSCHRIFT

(11) **EP 3 436 374 B1**
(45) Veröffentlichungstag und Bekanntmachung des Hinweises auf die Patenterteilung: **28.08.2024**
(21) Anmeldenummer: 17715043.0
(22) Anmeldetag: 30.03.2017
(51) Int. Cl.: B65G 11/08, B65G 47/44, B65G 27/24, B65G 43/08

(54) **VEREINZELUNGSVORRICHTUNG**
SEPARATION DEVICE
DISPOSITIF DE SÉPARATION

(30) Priorität: 01.04.2016 DE 102016003766
(43) Veröffentlichungstag der Anmeldung: 06.02.2019
(73) Patentinhaber: Steinert GmbH, 50933 Köln (DE)
(72) Erfinder: KILLMANN, Dirk, 50321 Brühl (DE); EILERS, Jann, 50829 Köln (DE); LAUMEN, Andreas, 50937 Köln (DE)
(74) Vertreter: Hübsch, Dirk
(86) Internationale Anmeldenummer: PCT/EP2017/000387
(87) Internationale Veröffentlichungsnummer: WO 2017/167446

(56) Entgegenhaltungen:
- WO-A1-2014/029493
- DE-A1- 4 143 235
- DE-U1- 202006 014 795
- JP-A- S6 036 207
- JP-U- H0 237 117
- JP-U- H0 237 118
- US-A1- 2015 053 535

## Beschreibung

Die Erfindung betrifft eine Vereinzelungsvorrichtung gemäß der Merkmale des Oberbegriffs des Patentanspruches 1. Weiterhin betrifft die Erfindung eine Sortiervorrichtung mit einer derartigen Vereinzelungsvorrichtung gemäß dem Patentanspruch 10.

Solche Vereinzelungsvorrichtungen werden insbesondere als Teil einer Sortiervorrichtung mit mindestens einem Sensor eingesetzt.

Im Stand der Technik sind Vereinzelungsvorrichtungen bekannt, die jedoch noch nicht optimal ausgebildet sind. Ziel der Vereinzelungsvorrichtung ist es, ein als Haufen vorliegendes Fördergut derart zu vereinzeln, dass das Fördergut schließlich perlenkettenförmig, nämlich partikelweise serialisiert auf einer Transportbandanordnung angeordnet ist. Diese perlenkettenartige Anordnung ist insbesondere vorteilhaft bei der Sortierung des Fördergutes, da die lineare und beabstandete Anordnung des Fördergutes nur so durch einen Sensor mit einem räumlich eingegrenzten Messbereich erfasst werden kann. Das Fördergut wird mittels einer Förderrinnenanordnung auf die nachgeordnete Transportbandanordnung gefördert. Die Förderrinnenanordnung weist nun unterschiedlich geneigte Bereiche auf, wobei durch die unterschiedlich geneigten Bereiche eine Geschwindigkeitskaskade des Fördergutstroms erzielbar ist. Die Bereiche können dabei durch unterschiedlich geneigte Förderrinnen oder durch eine Förderrinne mit unterschiedlich geneigten Gleitflächen oder durch Förderinnen mit unterschiedlichen Schwingparametern, wie Amplitude, Richtung und Frequenz gebildet sein.

Aus der gattungsbildenden DE 10 2012 015 812 A1 ist ein Verfahren zur Aufarbeitung von Stahlschrotten bekannt, bei denen die Stahlschrotte mit zumindest einer Flüssigkeit zur Ablösung von Oberflächenbeschichtungen behandelt werden. Hiernach erfolgt eine spektroskopische Analyse der Stahlschrottzusammensetzung. Die Stahlschrotte werden mittels eines LIBS-Sensors untersucht (LIBS steht für "laser-induced breakdown spectroscopy"). Es ist nun eine Vereinzelungsvorrichtung zur Zuführung der Stahlschrotte zu dem LIBS-Sensor vorhanden. Die Vereinzelungsvorrichtung weist Transportbänder sowie Förderrinnen in Form von Schwingförderern, insbesondere Schwingrinnen oder Schüttelrutschen auf. Die Vereinzelung der Stahlschrottstücke erfolgt so, dass mehrere dieser Module hintereinander angeordnet werden, und die Stahlschrottstücke dann mit unterschiedlichen Geschwindigkeiten bewegt werden. Ein erstes Modul bewegt die Stahlschrottstücke mit relativ geringer Geschwindigkeit von zum Beispiel 5 Metern pro Minute. Von diesem Modul werden die Stahlschrottstücke an ein weiteres Modul übergeben das die Stahlschrottstücke mit deutlich höherer Geschwindigkeit von zum Beispiel 180 Metern pro Minute bewegt. Auf diese Weise wird der Abstand zwischen den Stahlschrottstücken vergrößert, d. h. es findet eine Vereinzelung statt, die eine separate Analyse der Stahlschrottstücke ermöglicht. Die Stahlschrottstücke werden durch diese Förderbandanordnung bzw. Transportbandanordnung in einer Geschwindigkeitskaskade von zunächst 5 Metern pro Minute, dann 25 Metern pro Minute, 100 Metern pro Minute und schließlich 180 Metern pro Minute bewegt. In den Bereich mit niedriger Geschwindigkeit sind Schwingförderer und in Bereichen mit höherer Geschwindigkeit sind Transportbänder angeordnet. Die Schrottstücke werden zunächst gleichmäßig auf eine Schwingrinnenfläche verteilt. Anschließend sollen durch definierte Strömungshindernisse die Schrottstücke in vorgegebene Bahnen geleitet werden.

Diese Vereinzelungsvorrichtung und die so gebildete Sortiervorrichtung sind aber noch nicht optimal ausgebildet, da die Strömungshindernisse die Stahlschrottstücke, d. h. das Fördergut bremsen und so die Durchsatzgeschwindigkeit herabgesenkt wird. Ferner besteht die Gefahr, dass die Strömungshindernisse die Stahlschrottstücke seitlich ablenken und durch den entstehenden Versatz die Stahlschrottstücke nicht mehr vom Sensor bei der Sortierung erfasst werden, da die Stahlschrottstücke den räumlich begrenzten Sensormessbereich passieren müssen.

Aus der DE 20 2006 014 795 U1 ist eine Vereinzelungsvorrichtung in Form eines Vibrationssortiergeräts für stabförmiges Sortiergut wie beispielsweise Schrauben oder dergleichen bekannt. Das Vibrationssortiergerät weist einen antreibbaren Sortierguttopf und einen ausgangseitig des Topfes angeordneten, in Transportrichtung geneigten Linearförderer auf. Der Linearförderer weist seitliche Führungen für das Sortiergut auf. Das Gefälle nimmt entlang der Förderstrecke zu. Eine erste Förderrinne des Linearförderers ist in einem Winkel von 15° gegen die Horizontale geneigt. An die erste Förderrinne grenzt in seiner axialen Verlängerung ein zweites Förderteil in Form einer Rutsche an. Dieses zweite Förderteil ist in einem Winkel von 30° gegen die Horizontale geneigt. Das erste Förderteil wird in Vibration gesetzt, das zweite Förderteil wird nicht in Vibration gesetzt.

Aus der DE 2 102 706 A ist eine Vereinzelungsvorrichtung bekannt, wobei ein trichterförmiger Zulauf verwendet wird, aus dem die zu sortierenden Teile insbesondere entsprechende Körner in eine Rinne strömen. Der Teilchenstrom in der Rinne wird unmittelbar im Zulauf periodisch in kurzen Zeitabständen gehemmt bzw. angehalten, indem in der Rinne ein auf- und abbewegtes Glied vorgesehen ist. Aus dieser Druckschrift ist ferner bekannt, einen Schwingförderer mit einer V-förmigen, nach unten geneigten Rinne zu verwenden. Diese Ausgestaltung wird jedoch als zu langsam verworfen, da auch eine verhältnismäßig kleine Anzahl von Teilchen erst nach langem Förderweg einzeln hintereinander liegen.

Aus der DE 10 2004 047 848 A1 ist ein Verfahren und eine Vorrichtung zum Sortieren von vereinzelten Prüflingen bekannt, wobei die Prüflinge mittels einer Förderstrecke von einer Zuführvorrichtung zu einer Bildverarbeitung transportiert werden. Es erfolgt dabei eine Geschwindigkeitserhöhung der Prüflinge entlang der Förderstrecke dadurch, dass eine Krümmung einer Gleitfläche nach unten zunehmend ausgebildet ist, so dass dadurch eine möglichst gleichmäßige Beschleunigung auf den Prüfling wirkt. Hierdurch bewegen sich die Prüflinge in einer Geschwindigkeitskaskade, wobei die unterschiedlichen Bereiche durch die eine Gleitfläche gebildet sind.

Aus der DE 20 2006 014 795 U1 ist ein Verfahren bzw. eine Vorrichtung zum Sortieren eines Sortiergutes bekannt, wobei ein erstes und ein zweites Förderteil vorgesehen sind und wobei eine Vereinzelung des Sortiergutes, insbesondere von Schrauben durch in Querrichtung zur Transportrichtung des Sortiergutes hin und her verschiebbare Schiebeelemente erfolgt.

Schließlich sind aus der JP 60-36207 A sowie aus der JP 02-37118 U und aus der JP 02-37117 U Verfahren bzw. Sortiervorrichtungen bekannt, wo der seitliche Versatz des Fördergutes beim Durchlaufen der Förderstrecke durch eine keilförmige Ausbildung der Förderstrecke verringert werden soll.

Schließlich offenbart die US 2015/0053535 A1 ein Verfahren bzw. eine Sortiervorrichtung, bei der ein umlaufendes Transportband vorhanden ist, insbesondere auch zumindest teilweise gemuldet ausgebildet ist.

Der Erfindung liegt die Aufgabe zugrunde, die gattungsbildende Vereinzelungsvorrichtung nun derart auszugestalten und weiterzubilden, so dass die Vereinzelung des Fördergutstroms verbessert ist.

Diese der Erfindung zugrundeliegende Aufgabe wird nun durch eine Vereinzelungsvorrichtung mit den Merkmalen des Patentanspruches 1 gelöst.

Die Fördergutanordnung weist mindestens zwei Keilrinnen auf. Durch die mehreren Keilrinnen wird das Fördergut bzw. werden die Fördergutteile in einer Geschwindigkeitskaskade gefördert. Dies hat den Vorteil, dass das Fördergut mit hohem Durchsatz bei der Vereinzelung insbesondere bezüglich des Messbereichs des Sensors mittig zentriert und so dann perlenkettenartig aufgereiht wird. Ferner ist durch die Verwendung von mindestens einer, insbesondere angetriebenen Keilrinne der Durchsatz erhöht. Durch Rüttelbewegungen der Förderinnenanordnung werden Haufwerke geglättet. Dies begünstigt die Ausbildung eines gleichmäßigen Partikelstroms bzw. gleichmäßigen Fördergutstroms. Die Haufwerke entstehen bspw. als Verschleppung einer nicht gleichmäßigen, batchweisen Beschickung der gesamten Anlage, insbesondere der Sortiervorrichtung. Der Einsatz von mindestens zwei Keilrinnen hat den Vorteil, dass eine Vereinzelung mit einem hohen Durchsatz erreicht werden kann, wobei die Gefahr eines seitlichen Versatzes des Fördergutes beim Durchlaufen der Förderstrecke vermindert wird. Hierdurch ist das Vereinzelungsverfahren bzw. die Vereinzelung des Fördergutes bzw. der jeweiligen Fördergutstücke/Fördergutteile verbessert.

Durch die Vereinzelungsvorrichtung ist eine "Monoschicht" erzielbar, wobei die Fördergutteile insbesondere beabstandet zueinander auf der Transportbandanordnung angeordnet sind. Es ist denkbar, dass die Fördergüter bzw. Fördergutteile in einer Monoschicht angeordnet sind, aber einzelne nebeneinander liegende Fördergüter bzw. Fördergutteile in Kontakt stehen.

Das zu sortierende Fördergut ist bzw. die Fördergutteile sind von der Förderrinnenanordnung auf die Transportanordnung leitbar. Das Fördergut wird dann von der letzten Keilrinne auf die Transportbandanordnung übergeben, wobei ein seitlicher Versatz beim Übergang auf die Transportbandanordnung zu vermeiden ist. Dies wird insbesondere durch eine spezifische Form des Transportbandes, insbesondere durch eine muldenförmige Form und/oder V-Form des Transportbandes in zumindest einem Bereich erreicht. Die muldenförmige Form und/oder V-Form des Transportbandes ist vorzugsweise durch unter dem Transportband angeordnete Leitelemente bzw. Segmente ausbildbar und/oder verstellbar, insbesondere auch einstellbar. Die V-Form des Transportbandes ist insbesondere eine spezifische Form eines gemuldeten Transportbandes, wobei dann eine V-Form des Transportbandes vorzugsweise enger ist als die V-Form der letzten Keilrinne. Hierdurch werden die Fördergutteile noch weiter in die Mitte gezwungen.

Die Förderrinnenanordnung weist unterschiedlich geneigte Bereiche auf, wobei die unterschiedlich geneigten Bereiche eine Geschwindigkeitskaskade mit ansteigenden Fördergeschwindigkeiten des Fördergutstroms ermöglichen. Die Bereiche sind durch unterschiedlich geneigte Keilrinnen gebildet. Es sind mindestens zwei Bereiche mit jeweils einer Keilrinne oder mehreren Keilrinnen vorhanden, wobei die Keilrinnen in den beiden Bereichen unterschiedliche Neigungen aufweisen. Die Förderrinnenanordnung weist mindestens eine erste Keilrinne und mindestens eine zweite Keilrinne auf, wobei die zweite Keilrinne stromabwärts der ersten Keilrinne angeordnet ist, wobei das Fördergut von der letzten, zweiten Keilrinne auf die Transportbandanordnung übergebbar ist bzw. übergeben wird. Die nachgeordnete, zweite Keilrinne oder auch nachgeordnete zweite Keilrinnen weisen dabei eine stärkere Neigung auf als die stromaufwärts angeordnete, erste Keilrinne. Die zweite Keilrinne ist dabei stärker geneigt angeordnet oder stärker geneigt anordenbar als die erste Keilrinne. Das Gefälle nimmt entlang der Förderrinnenanordnung zu. Die Keilrinnen sind insbesondere in einer Linie angeordnet. Alternativ können Keilrinnen winklig, insbesondere auch recht-, weit- oder spitzwinklig zueinander angeordnet sein.

Es ist denkbar, dass mehrere erste Keilrinnen parallel zueinander angeordnet sind. Hierbei sind dann mehrere zweite Keilrinnen ebenfalls parallel zueinander angeordnet, um durch die parallele Anordnung der Keilrinnen den Durchsatz noch weiter zu erhöhen. Ferner ist es denkbar, Keilrinnen mit mehreren, nebeneinander ausgebildeten V-förmigen Bereichen zu verwenden, wobei diese Keilrinnen vorzugsweise in Kombination mit mehreren parallelen gemuldeten und/oder V-förmig Bändern (Transportbändern) oder einem geteilten Band verwendet werden. Die Keilrinne kann dabei einen entsprechend breiten mehrkeiligen Förderboden aufweisen und insbesondere mit einem gemeinsamen Antrieb für den Förderboden mit den V-förmigen Bereichen arbeiten.

Vorzugsweise sind genau eine erste Keilrinne und genau eine zweite Keilrinne vorhanden.

Das Fördergut wird von der zweiten Keilrinne auf die Transportbandanordnung übergeben, wobei am Ende der zweiten Keilrinne eine Fallhöhe für das Fördergut auf die Transportbandanordnung derart gering ist, um ein signifikantes, seitliches Verspringen und insbesondere vor allem ein Überschlagen des Fördergutes zu vermeiden. Die Fallhöhe des Fördergutes zwischen der ersten und der zweiten Keilrinne ist größer als die Fallhöhe des Fördergutes zwischen der zweiten Keilrinne und der Transportbandanordnung. Dadurch, dass die Fallhöhe zwischen der ersten und der zweiten Keilrinne höher ist wird die Vereinzelung des Fördergutes bzw. der Fördergutteile unterstützt. Insbesondere wenn zwei Fördergutteile in der ersten Keilrinne noch übereinander liegen werden diese durch die größere Fallstrecke zwischen der ersten und der zweiten Keilrinne separiert. Zudem können verhakte Fördergutteile durch den Aufschlag auf die zweite Keilrinne voneinander gelöst werden. Die Fördergüter bzw. Fördergutteile weisen dabei eine bestimme Korngröße auf. Die Fallhöhe zwischen der ersten und der zweiten Keilrinne ist größer als die jeweilige Korngröße des Fördergutes.

Die Geschwindigkeit der Transportbandanordnung ist größer oder mindestens genauso groß wie die Endgeschwindigkeit des Fördergutes am Ende der zweiten Keilrinne.

Die Fördereranordnung weist vorzugsweise eine angetriebene Bunkerrinne auf. Das Fördergut wird von der Bunkerrinne auf die erste Keilrinne übergeben. Die Bunkerrinne ist insbesondere als Vibrationsförderer ausgebildet. Die Bunkerrinne ist vorzugsweise als Magnetschwingrinne ausgebildet. Die Ausbildung als Magnetschwingrinne hat den Vorteil, dass die Amplitude der Bewegung klein ist und die Frequenz mit kurzer Reaktionszeit regelbar ist. Hierdurch ist eine besonders gute Dosierung des Förderstroms ermöglicht.

Alternativ könnte die Bunkerrinne durch eine gut regelbare Unwuchtrinne gebildet sein. Alternativ zur Verwendung einer Bunkerrinne kann ein langsam laufendes und gut regelbares Förderband verwendet werden. Der Zweck dieser Bunkerrinne bzw. des langsamen Förderbandes ist das "Puffern" von Material. Das gepufferte Material wird dosiert abgegeben, insbesondere auf die erste Keilrinne.

In besonders bevorzugter Ausgestaltung ist der Füllstand der, insbesondere angetriebenen Bunkerrinne oder der Füllstand des vorgeordneten Förderbandes mittels eines Füllstandssensors, insbesondere mittels einer Füllstandkamera detektierbar. Als Füllstandssensor kann eine 3D-TOF-Kamera (TOF=time off light) oder eine normale Videokamera und eine Höhenmessung per Ultraschall eingesetzt werden. Mittels des Füllstandssensors ist die Stoffstrombewegung bzw. der Fördergutstrom in der Bunkerrinne bzw. in dem vorgeordneten Förderband abschnittsweise messbar. Hierdurch kann ein möglichst gleichförmiger Volumenstrom am Abwurfpunkt der Bunkerrinne bzw. des vorgeordneten Förderbandes eingeregelt werden. Vorzugsweise ist ein Steuer- oder Regelkreis vorhanden. Mittels des Regelkreises ist die Geschwindigkeit der Bunkerrinne bzw. dieses ersten Förderbandes in Abhängigkeit von dem Füllstand regelbar. Hierdurch ist eine Vergleichmäßigung des Materialstroms ermöglicht. Die Bunkerrinne bzw. das erste, vorgeordnete Förderband ist in Abhängigkeit von den Sensordaten des Füllstandsensors regelbar und/oder steuerbar. Dieses vereinfacht die Vereinzelung. Zudem kann bei Überfüllung der Bunkerrinne bzw. des vorgeordneten Förderbandes ein Signal gegeben werden, um die Zuförderung zur Bunkerrinne bzw. zum Förderband kurzfristig zu unterbrechen.

Die beiden Keilrinnen weisen vorzugsweise jeweils einen Antrieb auf, der die Keilrinnen mittels einer Unwucht in Schwingung versetzt. Durch Regelung oder Steuerung der Amplitude und/oder der Frequenz kann das Haufwerk aufgelockert und vorangetrieben werden. Die Neigung der Keilrinnen sind so anzupassen, dass die Aufenthaltszeit in der ersten Keilrinne ausreicht, um eine gleichmäßige Verteilung des Förderguts zu erreichen. Die Keilform ist so ausgestaltet, dass die Fördergüter bzw. die Fördergutteile in der Mitte der Rinne beim Transport angeordnet werden. Die Keilform und/oder die Schwingrichtung sind dabei insbesondere an die Korngröße der jeweiligen Fördergüter bzw. der Fördergutteile angepasst. Die Form der beiden Keilrinnen ist insbesondere so ausgestaltet, dass das Fördergut bzw. die Fördergutteile in die Mitte der Keilrinnen bzgl. der Förderrichtung transportiert wird bzw. werden.

Die Neigung der ersten Keilrinne ist derart gewählt, dass das Fördergut bzw. die Fördergutteile schneller als in der Bunkerrinne oder in dem vorgeordneten Förderband gefördert werden. Die Fördergeschwindigkeit in der zweiten Keilrinne ist größer als in der ersten Keilrinne.

Die Neigung der Keilrinnen ist einstellbar. Der Antrieb der Keilrinnen ist vorzugsweise regelbar und/oder steuerbar. Die Bunkerrinne ist höher als die erste Keilrinne angeordnet. Die erste Keilrinne ist höher als die zweite Keilrinne angeordnet. Die zweite Keilrinne ist höher als die Transportbandanordnung angeordnet.

Die Fördergeschwindigkeit des Transportbandes kann größer sein als die Endgeschwindigkeit des Fördergutes bzw. der Fördergutteile am Ende der zweiten Keilrinne.

In einem ersten Bereich ist das Transportband flach ausgebildet. Ein insbesondere gemuldeter und/oder V-förmig ausgebildeter zweiter Bereich ist dem ersten Bereich nachgeordnet. Das Fördergut gelangt in den gemuldeten und/oder V-förmigen Bereich des Transportbands von der zweiten Keilrinne auf das Transportband. Die letzte Keilrinne endet im Bereich der Muldung und/oder im Bereich der V-Form des Transportbands. Zunächst erfolgt nun eine Angleichung der Geschwindigkeit des Förderguts bzw. der Fördergutteile an die Geschwindigkeit des Transportbandes. In diesem zweiten Bereich des Transportbandes ist die Transportbandanordnung insbesondere muldenartig und/oder V-förmig ausgestaltet, um eine Zentrierung des Fördergutes bzw. der Fördergutteile im Bereich des Sensors sicherzustellen. Eine "Mulde" und/oder V-Form hilft bei der mittigen Ausrichtung des Fördergutes bzw. der Fördergutteile. Die Fördergutteile können so nicht zur Seite wegspringen, sondern prallen an den aufragenden Bandflanken zurück in die Mitte der Mulde bzw. in den unteren Bereich des V-förmigen Transportbandes. Nach einer bestimmten Distanz beispielsweise ca. 1 Meter kann die Muldung und/oder V-Form wieder sanft in eine flache Bandstrecke überführt werden. An den Endseiten wird das Transportband umgelenkt, wobei das Transportband hier im Wesentlichen flach angeordnet bzw. ausgebildet ist. Die Fördergutteile bleiben auch in diesem dritten Bereich in der Mitte liegen, da die Fördergutteile keinem Ruck ausgesetzt sind. Die Mulde und/oder V-Form kann insbesondere durch unterhalb des Transportbandes angeordnete Leitelemente (bzw. Segmente) hervorgerufen werden, wobei die Leitelemente eine Mulden- oder Keilform aufweisen bzw. bilden und das Transportband an diesen Leitelementen entlangläuft und hierdurch geformt wird. Mittels der Leitelemente kann das insbesondere flexibel ausgebildete Transportband insbesondere segmentweise gemuldet und/oder V-förmig ausgebildet und/oder angeordnet werden. Die Leitelemente sind vorzugsweise in unterschiedlichen Segmenten angeordnet, wobei die Leitelemente, insbesondere auch segmentweise insbesondere bzgl. der Mulden- bzw. der Keilform (V-Form) verstellbar sind.

Anschließend, d.h. nach der Angleichung der Transportgeschwindigkeit erfolgt die Messung mittels des mindestens einen Sensors. Die Messung kann noch im zweiten, gemuldeten und/oder V-förmigen Bereich und/oder im flachen, dritten Bereich des Transportbandes erfolgen. Beispielsweise kann mit einer 3D-Kamera noch in der Muldung und/oder in der V-Form und/oder mit einem LIBS-Sensor im flachen, dritten Bereich gemessen werden.

In alternativer Ausgestaltung zu einem muldenartig und/oder V-förmig geformten Transportband können zwei Transportbänder eingesetzt werden, die im Wesentlichen V-förmig zueinander stehen bzw. dann eine V-förmige Anordnung bilden. Durch diese V-förmige Anordnung der Transportbänder ist ebenfalls eine Zentrierung des Fördergutes bzw. der Fördergutteile im Bereich des Sensors ermöglicht. Hierbei findet sowohl die Übergabe von der Keilrinne als auch die Messung insbesondere in der V-förmigen Anordnung der Transportbandanordnung statt.

In einer Ausgestaltung werden das Fördergut bzw. jeweilige Fördergutteile nun stromabwärts des Sensors ausgetragen, insbesondere durch Luftstöße, Wasserstöße oder dergleichen. Die Fördergutteile werden nach der sensorischen Erfassung und Bewertung der Sensordaten mittels einer Entscheidungslogik einer Datenverarbeitungsanlage entweder ausgeschleust oder passieren das Ende der Transportbandanordnung. In besonders bevorzugter Ausgestaltung ist das Transportband genoppt oder geriffelt ausgebildet, so dass das Fördergut bzw. die Fördergutteile nicht vollkommen plan auf der Oberfläche des Transportbandes aufliegen kann, sondern die Noppen oder Riffel einen Zwischenraum zwischen dem Fördergut bzw. den Fördergutteilen und dem Transportbandboden ermöglichen und so das Fördergut bzw. die Fördergutteile gut von einem Luftstoß oder Wasserstoß erfasst werden kann. In der Ausgestaltung der V-förmig zueinander angeordneten Transportbänder könnte man insbesondere auch einen Luftstoß von unten durch einen vorgesehenen Spalt nach oben schießen. Die Ausschleusung kann je nach Ausführungsform daher durch Druckluftstöße, mechanische Stößel oder Klappen von unten, oben und/oder seitlich in Bezug zur Förderrichtung erfolgen. Diese insbesondere zuletzt genannte Ausgestaltung ist insbesondere bei der Vereinzelung von Blechteilen oder von anderen, insbesondere ebenen Fördergutteilen bevorzugt.

Vorzugsweise erfolgt ein seitlicher Austrag. Der seitliche Austrag hat den Vorteil, dass so nacheinander mehrere Fraktionen ausgetragen werden können. Die Lage der Fördergutteile ist über einen längeren Transportbereich berechenbar. Um einen seitlichen Austrag zu gewährleisten sind nun vorzugsweise mehrere seitliche Austragseinheiten in der Austragszone vorgesehen. Diese Austragseinheiten können mit Druckluft arbeiten, einen Stößel verwenden, oder auch Klappen oder dergleichen. Wenn X Austragseinheiten vorgesehen sind, können insgesamt X+1 Fraktionen in einem Sortierdurchgang sortiert werden.

Ferner ist es denkbar, dass in diesem Austragsbereich bzw. in der Austragszone eine Blasleiste angeordnet ist, wobei mittels der Blasleiste eine Separierung des Fördergutes bzw. jeweiliger Fördergutteile in unterschiedliche Klassen erfolgen kann, in dem das Fördergut bzw. die Fördergutteile entweder einer normalen Wurfparabel folgt oder durch einen Druckluft- oder Wasserstoß mittels der Blasleiste abgelenkt wird und so dann eine Trennung erfolgt.

Bei einer Sortiervorrichtung mit einer Vereinzelungsvorrichtung ist nun mindestens ein Sensor, insbesondere sind mehrere Sensoren vorhanden, um Materialeigenschaften oder sonstige Merkmale des Fördergutes bzw. der jeweiligen Fördergutteile zu detektieren. Anhand der detektierten Materialeigenschaften oder sonstigen Merkmale kann das Fördergut bzw. die Fördergutteile klassifiziert werden. Neben den Materialeigenschaften können die Sensoren bspw. die Größe oder Form des Fördergutes bzw. der jeweiligen Fördergutteile erfassen und diese mit entsprechenden Sortierkriterien vergleichen.

Es ist vorzugsweise ein 3D-Sensor, insbesondere eine Kamera zur Messung nach dem Prinzip der Lasertriangulation mit einem Linienlaser als Lichtquelle vorhanden. Mittels des 3D-Sensors wird vorzugsweise die gesamte Breite des Förderbandes erfasst, wodurch kontrolliert werden kann, ob alle Fördergutteile den Messbereich passieren oder, ob einzelne Fördergutteile nicht mittig im Messbereich liegen und so nicht optimal erfasst werden. Die nicht mittig liegenden Fördergutteile können in eine spezielle Produktfraktion aussortiert werden.

Durch die vorgestellten Maßnahmen erfolgen eine Vereinzelung sowie eine mittige Anordnung der Fördergutteile im Bereich der Sensoren. Es können die Sensoren in einem lokal begrenzten Bereich messen, wodurch die Messung vereinfacht und verbessert werden kann. Es ist beispielsweise nicht nötig, mehrere Sensoren nebeneinander anzuordnen, sondern es kann ausreichen lediglich mittels eines Sensors die Materialeigenschaften zu messen.

Als Sensoren zur Messung der Materialeigenschaften kann insbesondere ein LIBS-Sensor vorhanden sein. Dieser LIBS-Sensor misst entweder lediglich an einem bestimmten Punkt oder es ist ein Umlenksystem vorgesehen, wobei jedoch mittels des Umlenksystems ein Laserstrahl nur wenig abgelenkt werden muss, um unterschiedliche Bereiche der Fördergutteile zu erfassen. Alternativ kann ein XRF-Detektor ein Raman-Spektrometer oder eine hochauflösende optische Kamera vorhanden sein. Es ist ferner denkbar punktuelle Messungen mit optischen Spektrometern zum Beispiel mit NIR-Spektrometern durchzuführen. Ferner ist es möglich, einen induktiven Sensor und/oder durchleuchtende Röntgensensoren einzusetzen. Die Röntgensensoren können das Fördergut vorzugsweise aus mehr als einer Durchleuchtungsrichtung analysieren, da die Fördergutteile hintereinander liegen.

Es ist denkbar, dass ein erster Sensor in Form einer 3D-Kamera nach dem Prinzip der Lasertriangulation oder eine Laserhöhenmessung oder eine Farbkamera oder eine Graustufenkamera zur Lagebestimmung vorhanden ist. Der zweite Sensor zur Messung der Materialeigenschaften kann aus der oben genannten Gruppe ausgewählt sein. Auch eine Kombination aus Sensoren der genannten Gruppen ist möglich.

Da die Fördergutteile vereinzelt auf dem Transportband angeordnet sind, ist es ferner denkbar, dass die Fördergutteile in einer der Transportbandanordnung nachgeordneten Fallstrecke nicht nur von oben, sondern auch von der Seite mit Sensoren abgetastet werden. Beispielsweise können Kameras vorgesehen sein, die die Fördergutteile von allen Seiten scannen und damit die gesamte Oberfläche erfassen.

Zur Verbesserung der Vereinzelung können insbesondere im Bereich der zweiten Keilrinne weitere Hilfsmittel vorgesehen sein. Beispielsweise können im Bereich der zweiten Keilrinne Höhenbegrenzungsmittel vorgesehen sein, die sicherstellen, dass lediglich eine "Monolage" auf das Transportband gelangt. Es kann beispielsweise oberhalb der zweiten Keilrinne ein Bürstenkopf angeordnet sein. Der Bürstenkopf kann beispielsweise einzelne biegsame Borsten aufweisen, wobei der Bürstenkopf rotiert und die Fördergutteile voneinander trennt, wenn diese mehrlagig aufeinanderliegen. Durch die Drehbewegung des Bürstenkopfes wird verhindert, dass die Fördergutteile gegen eine wesentlich langsamere Barriere treffen und so die Gefahr vermindert ist, dass eine Verstopfung hervorgerufen wird. Alternativ können die Höhenbegrenzungsmittel als herabhängende Laschen oder dergleichen ausgebildet sein.

Die eingangs genannten Nachteile sind daher vermieden entsprechende Vorteile sind erzielt.

Es gibt nun eine Vielzahl von Möglichkeiten die erfindungsgemäße Vereinzelungsvorrichtung bzw. eine Sortiervorrichtung mit einer derartigen Vereinzelungsvorrichtung in vorteilhafter Art und Weise auszugestalten und/oder weiterzubilden. Hierfür darf zunächst auf die dem Patentansprüchen 1 und 10 nachgeordneten Patentansprüche verwiesen werden. Im Folgenden wird eine bevorzugte Ausgestaltung der Erfindung anhand der Zeichnung und der nachfolgenden Beschreibung näher erläutert. In der Zeichnung zeigt:
- Fig. 1: eine erfindungsgemäße Vereinzelungsvorrichtung in einer bevorzugten Ausführungsform in einer schematischen perspektivischen Darstellung,
- Fig. 2: in einer schematischen perspektivischen Seitenansicht die Vereinzelungsvorrichtung aus Fig. 1 mit wesentlichen Komponenten,
- Fig. 3: in einer schematischen perspektivischen Darstellung, eine schematische stirnseitige Ansicht der Vereinzelungsvorrichtung aus der Fig. 2, und
- Fig. 4: in einer schematischen perspektivischen Darstellung eine Sortiervorrichtung in einer bevorzugten Ausführungsform mit der Vereinzelungsvorrichtung aus den Fig. 1 bis 3.

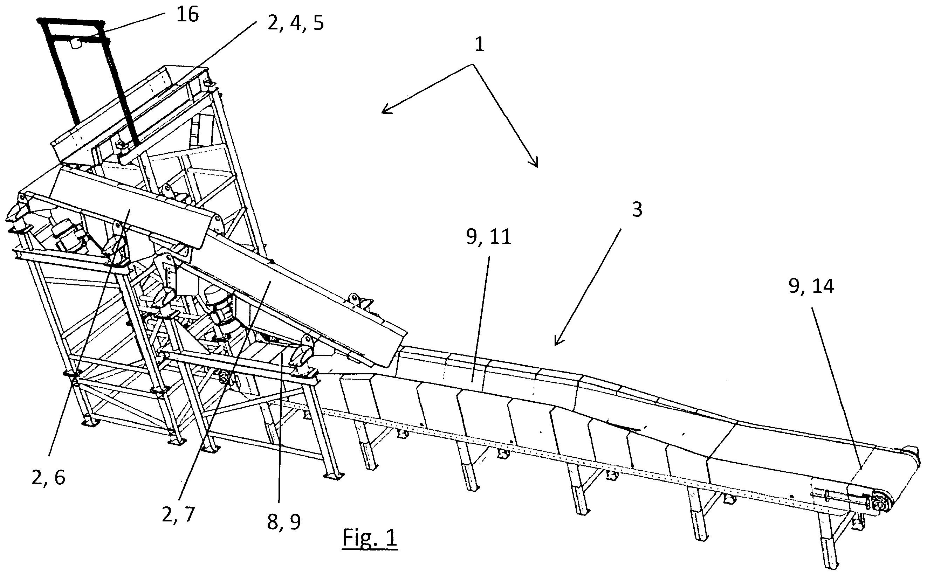

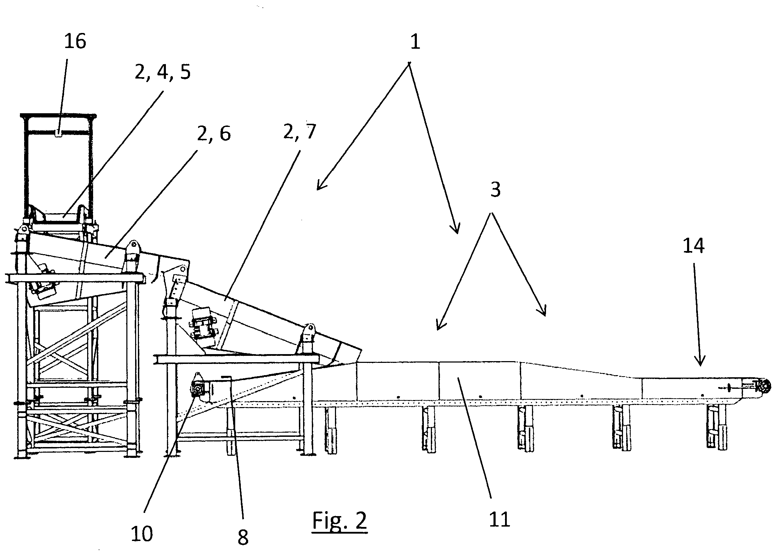

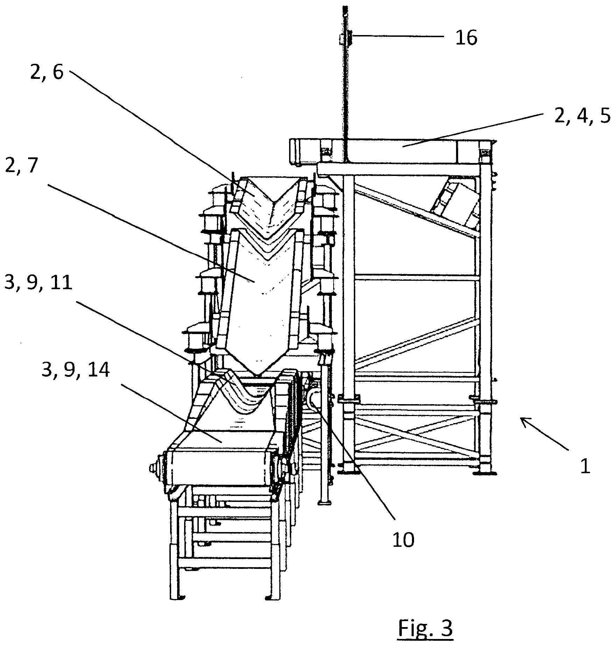

### Zunächst darf auf die Fig. 1 bis 3 näher eingegangen werden:

In den Fig. 1 bis 3 ist eine Vereinzelungsvorrichtung 1 gut zu erkennen. Die Vereinzelungsvorrichtung 1 dient zur Vereinzelung eines insbesondere als Haufwerk vorliegenden Fördergutes. Als Fördergut bzw. Fördergutteile können beispielsweise Metallteile, Metallschrotte, Erzbrocken, Batterien, Verpackungen, Abfall oder dergleichen bzw. eine auch teilweise entsprechende Mischung der zuvor genannten Komponenten dienen. Wird daher eingangs und/oder im Folgenden allgemein von "Fördergut" gesprochen, sind "Fördergutteile" gemeint, bzw. wird eingangs und/oder im Folgenden von einem "Fördergutstrom" gesprochen, ist der Strom der "Fördergutteile" gemeint.

Die Vereinzelungsvorrichtung 1 weist eine Förderrinnenanordnung 2 auf. Das Fördergut gelangt von der Förderrinnenanordnung 2 auf eine Transportbandanordnung 3. Das Fördergut ist mittels der Förderrinnenanordnung 2 auf die Transportbandanordnung 3 leitbar.

Die Förderrinnenanordnung 2 weist nun unterschiedlich geneigte Förderrinnen-Bereiche auf, wobei durch die unterschiedlich geneigten Bereiche eine Geschwindigkeitskaskade des Fördergutstroms erzielbar ist.

Die Förderrinnenanordnung 2 weist nun zunächst eine Bunkerrinne 4 auf. Die Bunkerrinne 4 weist einen ebenen Boden auf. Das zunächst als Haufwerk vorliegende Fördergut wird mittels entsprechender Transportbänder oder dergleichen in die Bunkerrinne 4 gefördert. Die Bunkerrinne 4 ist vorzugsweise als Vibrationsförderer, nämlich insbesondere als Magnetschwingrinne 5 ausgebildet. Die Bunkerrinne 4 ist im Wesentlichen horizontal ausgerichtet oder weist eine geringe Neigung auf. Bewegungen des Förderguts innerhalb der Bunkerrinne 4 erfolgt durch den Antrieb der Bunkerrinne 4. Der Einsatz einer Magnetschwingrinne 5 hat den Vorteil, dass die Fördergeschwindigkeit innerhalb der Bunkerrinne 4 schnell regelbar ist. Die Bunkerrinne 4 dient dazu den Materialstrom bzw. Fördergutstrom möglichst dosiert an die nachgeordneten Bereiche der Förderrinnenanordnung 2 abzugeben, so dass ein gleichmäßiger Fördergutstrom entsteht.

In besonders bevorzugter Ausgestaltung ist der Bunkerrinne 4 ein Füllstandsensor 16, insbesondere eine ortsauflösende Füllstandskamera zugeordnet, mittels der der Füllstand der Bunkerrinne 4 erfassbar ist. Insbesondere wird mittels des Füllstandsensors 16 das in der Nähe der nicht näher bezeichneten Abwurfkante liegende Material erfasst. Beispielsweise kann der Fördergutstrom in der Bunkerrinne mit 4 Bildern pro Sekunde erfasst werden. Mittels des Füllstandsensors 16 ist nun ein Regelkreis aufbaubar, so dass der Materialstrom des Fördergutes bzw. der Fördergutstrom von der Bunkerrinne 4 möglichst gleichmäßig an die nachfolgenden Rinnen abgegeben werden kann. Die Regelung kann bspw. im Sekundentakt erfolgen. Die Füllstandskamera misst den Füllstand. Über eine Mustererkennung kann dabei die Bewegung des Materials in der Bunkerrinne 4 verfolgt werden. Die Bunkerrinne 4 ist dabei quer zur restlichen, insbesondere linearen Anordnung der Förderrinnenanordnung 2 angeordnet. Dies erleichtert die Vereinzelung des Fördergutstroms, da die Fördergutteile zum Beispiel in Förderschüben an unterschiedlichen Stellen in die nachfolgende Rinne fallen.

Die Förderrinnenanordnung 2 weist mindestens zwei Keilrinnen 6 und 7 auf. Hierbei ist der Fördergutstrom bzw. sind die Fördergutteile von der Keilrinne 6 bzw. 7 auf die Transportbandanordnung 3 leitbar. Der Einsatz der Keilrinnen 6 und 7 hat den Vorteil, dass einerseits das Material in einer Geschwindigkeitskaskade beschleunigt werden kann und gleichzeitig die Fördergutteile zentriert werden. Durch die Keilrinne 6 werden aufeinanderliegende Fördergutteile aufgerüttelt, so dass diese Fördergutteile insbesondere häufig hintereinander zu liegen kommen. Ziel ist es, mittels der Vereinzelungsvorrichtung 1 eine "perlenkettenartige Aufreihung" der Fördergutteile auf der Transportbandanordnung 3 zu erhalten. Die Fördergutteile sind dabei insbesondere in einer "Monoschicht", d. h. einlagig angeordnet und insbesondere zueinander beabstandet (oder lediglich an einer Stelle kontaktierend angeordnet), so dass die Fördergutteile separat von einem Sensor zur Sortierung erfasst werden können. Mittels der Vereinzelungsvorrichtung 1 ist ein besonders hoher Durchsatz erzielbar.

In der erfindungsgemäßen Ausgestaltung sind nun zwei Keilrinnen 6 und 7 hintereinander angeordnet. Das Fördergut bzw. die Fördergutteile gelangt aus der Bunkerrinne 4 zunächst in die erste Keilrinne 6 und von da aus in eine stärker geneigte Keilrinne 7. Die Keilrinnen 6, 7 sind angetrieben. Die Keilrinnen 6, 7 sind insbesondere als Unwuchtrinnen ausgebildet. Die Keilrinne 6 ist nur leicht geneigt zur Horizontalen angeordnet und die Keilrinne 7 ist zur Horizontalen stärker geneigt angeordnet, wodurch die Keilrinne 6 einen ersten Bereich bildet und die Keilrinne 7 einen zweiten Bereich bildet, der stärker geneigt ist. Die - zweite - Keilrinne 7 ist zur Horizontalen also stärker geneigt angeordnet, als die erste Keilrinne 6.

Es ist denkbar, in alternativer Ausgestaltung lediglich eine Keilrinne vorzusehen, die jedoch nicht gerade ausgestaltet ist, sondern unterschiedlich geneigte Bereiche aufweist, um eine entsprechende Geschwindigkeitskaskade des Fördergutstroms zu erzielen. Dadurch, dass die Fördergutteile beim Durchlaufen der Förderrinnenanordnung 2 und insbesondere auch der Transportbandanordnung 3 zunehmend beschleunigt werden, findet eine Vereinzelung statt. Ferner ist auch der Einsatz von drei oder mehr Keilrinnen möglich bzw. denkbar.

In der ersten Keilrinne 6 wird durch die Unwuchtschwingung der Fördergutstrom aufgelockert und vorangetrieben. Die Neigung der ersten Keilrinne 6 ist so angepasst, dass die Aufenthaltszeit in der ersten Keilrinne 6 noch ausreicht, um eine insbesondere weitgehend gleichmäßige Verteilung der Objekte bzw. der Fördergutteile zu erreichen. Einzelne Fördergutteile, die noch zweilagig angeordnet sind, werden durch den Fall auf die zweite Keilrinne 7 vereinzelt, da in der ersten Keilrinne 6 ein untenliegendes Fördergutteil im freien Fall zuerst auf der zweiten Keilrinne 7 aufschlägt und nun schon ein Stück weiter transportiert wird, bevor das zweite in der Keilrinne 6 noch oben liegende Fördergutteil auf der zweiten Keilrinne 7 aufschlägt. Eine Fallhöhe zwischen der zweiten Keilrinne 7 und der Transportbandanordnung 3 ist kleiner als eine Fallhöhe zwischen der ersten Keilrinne 6 und der zweiten Keilrinne 7. Die Fallhöhe zwischen der ersten Keilrinne 6 und der zweiten Keilrinne 7 ist größer als die Korngröße des Förderguts bzw. der Fördergutteile. Hierdurch ist sichergestellt, dass am Ende der zweiten Keilrinne 7 eine Monolage erzielt ist. Die zweite Keilrinne 7 dient ferner dazu den Fördergutstrom mittig auf die Transportbandanordnung 3 zu übergeben. Die Fallhöhe zu der Transportbandanordnung 3 ist insbesondere nur gering, so dass die Gefahr eines seitlichen Verspringens und/oder Überschlagens der Fördergutteile vermindert ist.

Der Geschwindigkeitsunterschied zwischen der Endgeschwindigkeit des Förderguts bzw. der Fördergutteile am Ende der zweiten Keilrinne 7 und der Transportbandanordnung 3 ist insbesondere derart bemessen, dass das Fördergut bzw. die Fördergutteile zunächst vor der Messung beruhigt und ruhig zu liegen kommt bzw. kommen, ohne seitlich zu verspringen und ohne zu überschlagen.

Die Transportbandanordnung 3 weist ein Transportband 9 auf, das mittels eines Antriebs 10 insbesondere endlos umlaufend bewegt wird. Die Transportbandanordnung weist einen ersten Bereich 8, einen zweiten Bereich 11 und einen dritten Bereich 14 auf. Im ersten und dritten Bereich 8, 14 ist das Transportband 9 flach, da hier das Transportband 9 endseitig umgelenkt ist. Im mittleren, zweiten Bereich 11 weist das Transportband eine Mulde auf bzw. ist muldenförmig ausgebildet.

In dem ersten Bereich 8 ist das Transportband 9 noch im Wesentlichen flach angeordnet bzw. ausgebildet, da der erste Bereich 8 nahe der Anfangsposition der Transportbandanordnung 3 ausgebildet ist, wobei in dem Anfangs- und Endbereich das Transportband 9 um eine im Wesentlichen zylindrische, angetriebene Trommel umläuft. Die Transportbandanordnung 3 weist ferner einen dritten Bereich 14 hinter dem gemuldeten, zweiten Bereich 11 auf, wobei hier das Transportband 9 ebenfalls im Wesentlichen flach angeordnet bzw. ausgebildet ist. Dieser dritte Bereich 14 dient vorzugsweise als Austragsbereich.

Es ist denkbar, dass die Trommeln nicht zylindrisch, sondern ebenfalls gemuldet ausgebildet sind, so dass das Transportband im ersten und dritten Bereich 8, 14 ebenfalls gemuldet ist.

Der flache Austragsbereich kann auch als separate, weiteres Transportband bzw. als weitere Gurtstrecke ausgebildet sein (nicht dargestellt). Dieses weitere Transportband ist vorzugsweise genoppt ausgebildet.

Im Bereich 11 wird das Fördergut bzw. werden die Fördergutteile auf das Transportband 9 übergeben. Die Muldung dient der Zentrierung der Fördergutteile. Die Mulde hilft bei der mittigen Ausrichtung des Fördergutes bzw. der Fördergutteile. Die Fördergutteile können so nicht zur Seite wegspringen, sondern prallen an den aufragenden Bandflanken zurück in die Mitte der Mulde. Nach einer bestimmten Distanz beispielsweise ca. 1 Meter kann die Muldung wieder sanft in eine flache Bandstrecke, nämlich in den dritten Bereich 14 überführt werden. Der dritte Bereich 14 kann aber ebenfalls gemuldet sein.

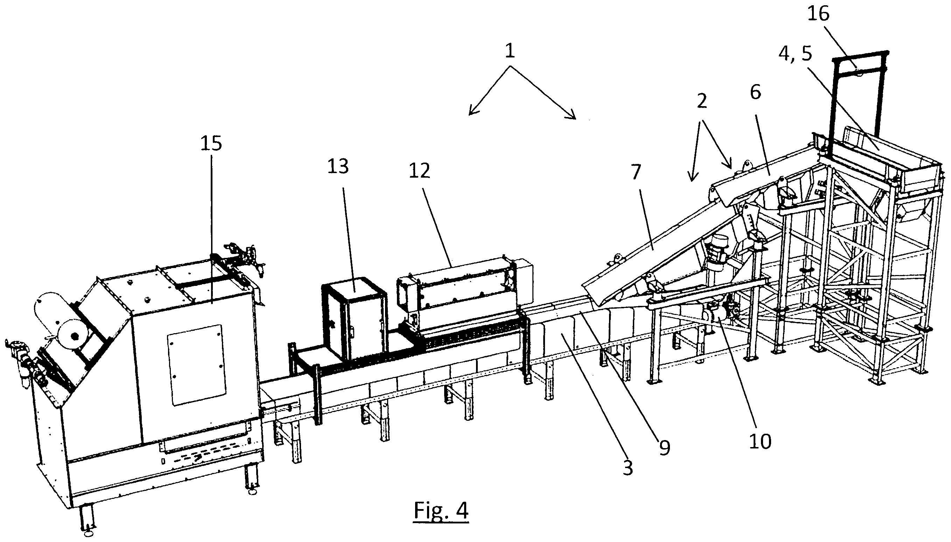

Es werden die Fördergutteile mittels mindestens eines Sensors 12, 13 klassifiziert. Die Sensoren 12, 13 können dabei die Fördergutteile von oben im Bereich der Muldung oder auch von oben und/oder von der Seite im flachen, dritten Bereich 14 erfassen. In Fig. 4 sind zwei Sensoren 12, 13 stark schematisch dargestellt. Der Sensor 12 kann dabei dem gemuldeten Bereich 11 und der Sensor 13 kann dem flachen Bereich 14 zugeordnet sein. In diesem zweiten Bereich 11 ist es nun wesentlich, dass die sich mit großer Geschwindigkeit bewegenden Fördergutteile mittig zentriert liegen, damit sie von dem Sensor 12 bzw. 13 gut erfasst werden können. In bevorzugter Ausgestaltung ist das Transportband 9 in diesem zweiten Bereich 11 muldenförmig, insbesondere konkav angeordnet bzw. ausgebildet. Hierdurch ist sichergestellt, dass die Fördergutteile weiterhin zentriert im Sichtfeld der Sensoren 12, 13 liegen. Diese muldenartige Wölbung des Transportbands 9 im zweiten Bereich 11 kann insbesondere dadurch erzielt werden, dass das Transportband 9 über eine muldenartig gewölbte Unterkonstruktion läuft, wobei das Transportband 9 hinreichend flexibel ist, um sich dieser Form entsprechend anzupassen.

In alternativer Ausgestaltung ist es denkbar, dass die Transportbandanordnung zwei keilförmig zueinanderstehende Transportbänder aufweist und so ebenfalls eine Zentrierung des Förderguts im Sichtbereich der Sensoren sichergestellt ist und ein seitliches Verspringen vermieden wird. Denkbar ist daher, dass die Transportbandanordnung zwei zueinander V-förmig angeordnete Transportbänder aufweist. Wenn wie bei der bevorzugten Ausführungsform nur ein Transportband 9 verwendet wird, kann dieses, insbesondere wenn es entsprechend flexibel ist, dann zumindest teilweise muldenförmig und/oder V-förmig ausgebildet und/oder angeordnet sein.

In der Fig. 4 ist nun eine Sortiervorrichtung mit einer entsprechenden Vereinzelungsvorrichtung 1 dargestellt, wobei hier am Ende der Transportbandanordnung 3 eine Austragstation 15 stark schematisch dargestellt ist. In der dargestellten Ausgestaltung kann der Austrag durch eine Blasleiste erfolgen, wobei die Blasleiste bestimmte Fördergutteile über einen nicht näher dargestellten Scheitel ausbläst und so mehrere Klassen gebildet werden können. In bevorzugter Ausgestaltung erfolgt der Austrag jedoch nicht durch eine quer zur Förderrichtung am Ende der Transportbandanordnung 3 angeordnete Blasleiste, sondern seitlich, da hierdurch mehr Austragsfraktionen in einem Sortierdurchgang gebildet werden können. Beispielsweise können drei Austragseinheiten zum seitlichen Austrag vorgesehen sein, so dass insgesamt vier verschiedene Austragsfraktionen in einem Sortierdurchgang gebildet werden können. Die Austragseinheiten können beispielsweise mittels Druckluft arbeiten, einen Stößel oder Klappen aufweisen oder mit einem Wasserstrahl arbeiten.

Durch die beschriebene Vereinzelungsvorrichtung 1 sind insbesondere die Kosten für die Sensoren 12, 13 verringerbar, da die Detektoren 12, 13 nur einen kleinen Bereich zur Messung abdecken müssen. Es kann insbesondere eine im Wesentlichen punktuelle Messung vorgenommen werden. Es ist nicht nötig, mehrere Sensoren nebeneinander anzuordnen, oder das Sensorsichtfeld durch ein Umlenksystem nach dem Materialstrom bzw. dem Fördergutstrom auszurichten. Ferner kann es technisch aufwändig sein, mehrere Sensoren, bspw. mehrere LIBS-Sensoren dicht nebeneinander anzuordnen.

Der erste Sensor 12 kann beispielsweise messen, ob das Objekt bzw. das jeweilige Fördergutteil in der Mitte des Transportbands 9 liegt. Hierzu kann eine 3D-Kamera eingesetzt werden. Der erste Sensor 12 kann beispielsweise mittels Lasertriangulation die Lage des Förderguts bzw. der Fördergutteile auf dem Transportband 9 messen. Es ist denkbar, dass mittels des ersten Sensors 12 eine Laserhöhenmessung vorgenommen wird oder dass der erste Sensor 12 eine Farbkamera zur Lagebestimmung umfasst.

Mittels des zweiten Sensors 13 werden die Sortierkriterien erfasst. Als zweite Sensoren bzw. Detektoren 13 kann insbesondere ein LIBS-Detektor verwendet werden. Dieser LIBS-Detektor kann dabei punktuell an einer festen Stelle in der Transportbandanordnung 3 messen oder es ist denkbar, dass der Laserstrahl mittels eines Spiegels leicht bewegt werden kann.

Alternativ kann der zweite Sensor/Detektor 13 als XRF-Detektor als RAMAN-Spektrometer oder als hoch auflösende optische Kamera beispielsweise mit 4 bis 20 cm Sichtbreite oder als optisches Spektrometer zum Beispiel als Nah-Infrarot-Spektrometer ausgebildet sein. Ferner ist es möglich, einen induktiven Sensor und/oder mindestens einen durchleuchtenden Röntgensensor einzusetzen. Wenn mehrere Röntgensensoren eingesetzt werden, kann das Fördergut vorzugsweise aus mehr als einer Durchleuchtungsrichtung analysiert werden, da die Fördergutteile hintereinander liegen.

Es ist denkbar, dass der zweite Sensor 13 einer Transportbandanordnung 3 nachgeordnet ist und der Sensor 13 das Fördergut in der Flugphase von mehreren Seiten erfasst. Auch hier ist die zuvor erfolgte Zentrierung des Fördergutstroms bzw. der Fördergutteile wesentlich, um die Flugbahn des Förderguts bzw. der Fördergutteile bei der Detektierung präzise voraussagen zu können.

Die eingangs genannten Nachteile sind daher vermieden und entsprechende Vorteile sind erzielt.

### Bezugszeichenliste:

- 1: Vereinzelungsvorrichtung
- 2: Förderrinnenanordnung
- 3: Transportbandanordnung
- 4: Bunkerrinne
- 5: Magnetschwingrinne
- 6: Keilrinne
- 7: Keilrinne
- 8: erster Bereich
- 9: Transportband
- 10: Antrieb
- 11: zweiter Bereich
- 12: Sensor
- 13: Sensor
- 14: dritter Bereich
- 15: Austragstation
- 16: Füllstandssensor

## Patentansprüche

1. Vereinzelungsvorrichtung (1) mit einer Förderrinnenanordnung (2) und mit einer Transportbandanordnung (3), wobei ein Fördergut mittels der Förderrinnenanordnung (2) auf die Transportbandanordnung (3) förderbar ist, wobei die Förderrinnenanordnung (2) unterschiedlich geneigte Bereiche aufweist, und wobei durch die unterschiedlich geneigten Bereiche eine Geschwindigkeitskaskade des Fördergutstroms erzielbar ist, **dadurch gekennzeichnet, dass** die Förderrinnenanordnung (2) mindestens zwei Keilrinnen (6, 7) aufweist, nämlich mindestens eine erste Keilrinne (6) und mindestens eine zweite Keilrinne (7) aufweist, wobei die zweite Keilrinne (7) stromabwärts der ersten Keilrinne (6) angeordnet ist, wobei die Neigung der Keilrinnen (6, 7) einstellbar ist, wobei das Fördergut von der zweiten, insbesondere letzten Keilrinne (7) auf die Transportbandanordnung (3) förderbar ist, wobei die zweite Keilrinne (7) stärker geneigt als die erste Keilrinne (6) angeordnet oder anordenbar ist, wobei eine Fallhöhe für das Fördergut zwischen der zweiten, insbesondere letzten Keilrinne (7) und der Transportbandanordnung (3) kleiner als eine Fallhöhe für das Fördergut zwischen der ersten Keilrinne (6) und der zweiten Keilrinne (7) ist, und wobei die Fallhöhe zwischen der ersten und zweiten Keilrinne (6, 7) größer als die jeweilige Korngröße des Fördergutes ist.

2. Vereinzelungsvorrichtung nach Anspruch 1, **dadurch gekennzeichnet, dass** die Förderrinnenanordnung (2) eine angetriebene Bunkerrinne (4) aufweist, wobei das Fördergut von der Bunkerrinne (4) auf die erste Keilrinne (6) übergebbar ist.

3. Vereinzelungsvorrichtung nach Anspruch 2, **dadurch gekennzeichnet, dass** die Bunkerrinne (4) als Magnetschwingrinne (5) ausgebildet ist.

4. Vereinzelungsvorrichtung nach einem der Ansprüche 2 oder 3, **dadurch gekennzeichnet, dass** der Bunkerrinne (4) ein Füllstandsensor (16) zugeordnet ist, wobei der Fördergutstrom innerhalb der Bunkerrinne (4) mittels des Füllstandsensors (16) erfassbar ist.

5. Vereinzelungsvorrichtung nach Anspruch 4, **dadurch gekennzeichnet, dass** die Bunkerrinne (4) in Abhängigkeit von den Sensordaten des Füllstandsensors (16) regelbar und/oder steuerbar ist.

6. Vereinzelungsvorrichtung nach einem der vorstehenden Ansprüche, **dadurch gekennzeichnet, dass** die Transportbandanordnung (3) ein endlos umlaufendes Transportband (9) aufweist, wobei in einem Bereich (11) das Transportband (9) gemuldet und/oder V-förmig ausgebildet ist.

7. Vereinzelungsvorrichtung nach Anspruch 6, **dadurch gekennzeichnet, dass** das Fördergut in den gemuldeten und/oder V-förmig ausgebildeten Bereich (11) des Transportbands (9) von der zweiten Keilrinne (7) auf das Transportband (9) gelangt.

8. Vereinzelungsvorrichtung nach einem der vorstehenden Ansprüche, **dadurch gekennzeichnet, dass** das Transportband (9) genoppt oder geriffelt ausgebildet ist.

9. Vereinzelungsvorrichtung nach einem der vorstehenden Ansprüche, **dadurch gekennzeichnet, dass** die Transportbandanordnung zwei zueinander V-förmig angeordnete Förderbänder aufweist.

10. Sortiervorrichtung mit einer Vereinzelungsvorrichtung nach einem der vorstehenden Ansprüche, **dadurch gekennzeichnet, dass** mindestens ein Sensor (13) zur Bestimmung einer Materialeigenschaft und/oder mindestens ein Sensor (12) zur Bestimmung der Lage der Fördergüter bzw. der Fördergutteile auf der Transportbandanordnung (3) vorhanden ist.

11. Sortiervorrichtung nach Anspruch 10, **dadurch gekennzeichnet, dass** der Sensor (13) als LIBS-Sensor, als XRF-Sensor, als Raman-Spektrometer, als Röntgensensor, als induktiver Sensor und/oder als NIR-Spektrometer ausgebildet ist.

12. Sortiervorrichtung nach einem der Ansprüche 10 oder 11, **dadurch gekennzeichnet, dass** mindestens eine Austragstation (15) vorgesehen ist.

13. Sortiervorrichtung nach Anspruch 12, **dadurch gekennzeichnet, dass** die Austragstation (15) mindestens eine Blasleiste und/oder mehrere Austragseinheiten, insbesondere Stößel und/oder Klappen aufweist.

## Claims

1. Separation device (1) having a conveying-channel arrangement (2) and having a transport-belt arrangement (3), wherein a material for conveyance is conveyable onto the transport-belt arrangement (3) by means of the conveying-channel arrangement (2), wherein the conveying-channel arrangement (2) has differently inclined regions, and wherein, by way of the differently inclined regions, a speed cascade of the material-for-conveyance stream is achievable, **characterized in that** the conveying-channel arrangement (2) has at least two wedge-shaped channels (6, 7), specifically at least one first wedge-shaped channel (6) and at least one second wedge-shaped channel (7), wherein the second wedge-shaped channel (7) is arranged downstream of the first wedge-shaped channel (6), wherein the inclination of the wedge-shaped channels (6, 7) is settable, wherein the material for conveyance is conveyable onto the transport-belt arrangement (3) from the second, in particular last, wedge-shaped channel (7), wherein the second wedge-shaped channel (7) is arranged or arrangeable so as to be inclined to a greater extent than the first wedge-shaped channel (6), wherein a drop height for the material for conveyance between the second, in particular last, wedge-shaped channel (7) and the transport-belt arrangement (3) is smaller than a drop height for the material for conveyance between the first wedge-shaped channel (6) and the second wedge-shaped channel (7), and wherein the drop height between the first and second wedge-shaped channels (6, 7) is greater than the respective grain size of the material for conveyance.

2. Separation device according to Claim 1, **characterized in that** the conveying-channel arrangement (2) has a driven bunker channel (4), wherein the material for conveyance is transferable onto the first wedge-shaped channel (6) from the bunker channel (4).

3. Separation device according to Claim 2, **characterized in that** the bunker channel (4) is designed as a magnetically oscillating channel (5).

4. Separation device according to Claim 2 or 3, **characterized in that** the bunker channel (4) is assigned a fill-level sensor (16), wherein the material-for-conveyance stream is detectable within the bunker channel (4) by means of the fill-level sensor (16).

5. Separation device according to Claim 4, **characterized in that** the bunker channel (4) is regulable and/or controllable according to the sensor data of the fill-level sensor (16).

6. Separation device according to one of the preceding claims, **characterized in that** the transport-belt arrangement (3) has an endlessly circulating transport belt (9), wherein, in one region (11), the transport belt (9) is of troughed and/or V-shaped form.

7. Separation device according to Claim 6, **characterized in that** the material for conveyance passes from the second wedge-shaped channel (7) to the transport belt (9) in the region (11) of troughed and/or V-shaped form of the transport belt (9) .

8. Separation device according to one of the preceding claims, **characterized in that** the transport belt (9) is of dimpled or ribbed form.

9. Separation device according to one of the preceding claims, **characterized in that** the transport-belt arrangement has two conveying belts which are arranged in a V-shaped manner with respect to one another.

10. Sorting device having a separation device according to one of the preceding claims, **characterized in that** provision is made of at least one sensor (13) for determining a material property and/or at least one sensor (12) for determining the position of the materials for conveyance or the parts of the materials for conveyance on the transport-belt arrangement (3).

11. Sorting device according to Claim 10, **characterized in** the sensor (13) is designed as an LIBS sensor, as an XRF sensor, as a Raman spectrometer, as an X-ray sensor, as an inductive sensor and/or as an NIR spectrometer.

12. Sorting device according to Claim 10 or 11, **characterized in that** provision is made of at least one discharge station (15).

13. Sorting device according to Claim 12, **characterized in that** the discharge station (15) has at least one blowing bar and/or multiple discharge units, in particular rams and/or flaps.

## Revendications

1. Dispositif de séparation (1) comportant un système de goulottes de convoyage (2) et comportant un système de bandes transporteuses (3), un produit à convoyer pouvant être convoyé sur l'ensemble de bandes transporteuses (3) au moyen de l'ensemble de goulottes de convoyage (2), le système de goulottes de convoyage (2) présentant des régions inclinées différemment, et une vitesse en cascade du flux de produit à convoyer pouvant être obtenue par le biais des régions inclinées différemment, **caractérisé en ce que** le système de goulottes de convoyage (2) présente au moins deux goulottes cunéiformes (6, 7), à savoir au moins une première goulotte cunéiforme (6) et au moins une deuxième goulotte cunéiforme (7), la deuxième goulotte cunéiforme (7) étant disposée en aval de la première goulotte cunéiforme (6), l'inclinaison des goulottes cunéiformes (6, 7) étant réglable, le produit à convoyer pouvant être convoyé sur le système de bandes transporteuses (3) à partir de la deuxième, en particulier dernière, goulotte cunéiforme (7), la deuxième goulotte cunéiforme (7) étant disposée ou pouvant être disposée de manière inclinée plus fortement que la première goulotte cunéiforme (6), une hauteur de chute pour le produit à convoyer entre la deuxième, en particulier dernière, goulotte cunéiforme (7) et le système de bandes transporteuses (3) étant inférieure à une hauteur de chute pour le produit à convoyer entre la première goulotte cunéiforme (6) et la deuxième goulotte cunéiforme (7), et la hauteur de chute entre la première et la deuxième goulotte cunéiforme (6, 7) étant supérieure à la granulométrie respective du produit à convoyer.

2. Dispositif de séparation selon la revendication 1, **caractérisé en ce que** le système de goulottes de convoyage (2) présente une goulotte de trémie (4) entraînée, le produit à convoyer pouvant être transféré de la goulotte de trémie (4) à la première goulotte cunéiforme (6).

3. Dispositif de séparation selon la revendication 2, **caractérisé en ce que** la goulotte de trémie (4) est réalisée sous forme de goulotte oscillante magnétique (5) .

4. Dispositif de séparation selon l'une des revendications 2 ou 3, **caractérisé en ce qu'**un capteur de niveau de remplissage (16) est associé à la goulotte de trémie (4), le flux de produit à convoyer à l'intérieur de la goulotte de trémie (4) pouvant être détecté au moyen du capteur de niveau de remplissage (16).

5. Dispositif de séparation selon la revendication 4, **caractérisé en ce que** la goulotte de trémie (4) peut être régulée et/ou peut être commandée en fonction des données de capteur du capteur de niveau de remplissage (16).

6. Dispositif de séparation selon l'une des revendications précédentes, **caractérisé en ce que** le système de bandes transporteuses (3) présente une bande transporteuse (9) circulant sans fin, la bande transporteuse (9) étant réalisée de manière incurvée en auge et/ou en forme de V dans une région (11).

7. Dispositif de séparation selon la revendication 6, **caractérisé en ce que** le produit à convoyer passe de la deuxième goulotte cunéiforme (7) à la bande transporteuse (9) dans la région (11), réalisée de manière incurvée en auge et/ou en forme de V, de la bande transporteuse (9).

8. Dispositif de séparation selon l'une des revendications précédentes, **caractérisé en ce que** la bande transporteuse (9) est réalisée de manière à présenter des ergots et/ou de manière ondulée.

9. Dispositif de séparation selon l'une des revendications précédentes, **caractérisé en ce que** le système de bandes transporteuses présente deux bandes de convoyage disposées en forme de V l'une par rapport à l'autre.

10. Dispositif de triage comportant un dispositif de séparation selon l'une des revendications précédentes, **caractérisé en ce qu'**au moins un capteur (13) servant à la détermination d'une propriété de matériau et/ou au moins un capteur (12) servant à la détermination de la position des produits à convoyer ou des parties de produit à convoyer sur le système de bandes transporteuses (3) est/sont présent(s).

11. Dispositif de triage selon la revendication 10, **caractérisé en ce que** le capteur (13) est réalisé sous forme de capteur LIBS, sous forme de capteur de fluorescence X, sous forme de spectromètre Raman, sous forme de capteur radiographique, sous forme de capteur inductif et/ou sous forme de spectromètre NIR.

12. Dispositif de triage selon l'une des revendications 10 ou 11, **caractérisé en ce qu'**au moins une station d'évacuation (15) est prévue.

13. Dispositif de triage selon la revendication 12, **caractérisé en ce que** la station d'évacuation (15) présente au moins une barrette de soufflage et/ou plusieurs unités d'évacuation, en particulier des poussoirs et/ou des clapets.
